# EUROPEAN PATENT APPLICATION

(11) **EP 4 826 660 A1**
(43) Date of publication of application: **21.10.2026**
(21) Application number: 26168146.4
(22) Date of filing: 26.03.2026
(51) Int. Cl.: G06T 12/20

(54) **ITERATIVE TOMOGRAPHIC RECONSTRUCTION**

(30) Priority: 16.04.2025 GB 202505708
(71) Applicant: Elekta Limited, Crawley, West Sussex RH10 9BL (GB)
(72) Inventor: MASON, Jonathan, Crawley RH10 9BL (GB); JOYCE, Thomas, Crawley RH10 9BL (GB); STANCANELLO, Joseph, Crawley RH10 9BL (GB)
(74) Representative: Haseltine Lake Kempner LLP

(57) **Abstract**

A computer-implemented method of tomographic reconstruction, the method comprising: receiving tomographic projection data of a subject; executing an initial portion of an iterative reconstruction procedure using the tomographic projection data to generate an initial volume estimate; identifying one or more metal regions within the initial volume estimate as a metal mask; forward-projecting the metal mask to determine metallic projection data; replacing data in the tomographic projection data corresponding to the metallic projection data with interpolated data to generate interpolated tomographic projection data; executing a final portion of the iterative reconstruction procedure using the interpolated tomographic projection data to generate a final volume estimate; and inserting a final metal mask into the final volume estimate to generate a corrected final volume estimate.

## Description

### Technical Field

The present disclosure relates to iterative tomographic reconstruction techniques. More particularly, the present disclosure relates to methods for tomographic reconstruction that reduce the presence of metal aftefacts, and related data processing apparatuses, computer programs and computer-readable storage media.

### Background

Tomography is a non-invasive imaging technique, which allows visualisation of the internal structures of an object without the superposition of other structures that often afflict conventional projection images. For example, in a conventional chest radiograph, the ribs, heart, and lungs may be superimposed upon the same film, whereas a computed tomography (CT) slice is able to capture each organ in its actual three-dimensional position. Tomography been applied across a range of disciplines, including medicine, physics, chemistry, and astronomy. While X-ray CT is perhaps the most familiar application of tomography, tomography may be performed using alternative imaging modalities, including ultrasound, magnetic resonance, nuclear-medicine, and microwave techniques.

As an example, in conventional X-ray CT scanning, an X-ray source projects a beam of X-rays through a patient and a detector measures attenuation of the X-rays. At the same time, the apparatus is rotated about an axis passing longitudinally through the patient. Thus, the detector acquires data indicating the attenuation of the beam in each direction in the plane in which rotation takes place. From this data (typically in the form of sinograms), computational means may compute the internal structure of the patient on that specific plane (or "slice"). The patient or apparatus may then be indexed along the axis and a further plane may be investigated. In this manner, a three-dimensional image or volume of the patient may be constructed from the various slices.

Mathematically, the raw data acquired by a tomographic detector consists of multiple "projections" of the object being scanned. These projections are effectively the Radon transformation of the structure of the object. Reconstruction by means of tomographic reconstruction essentially involves solving the inverse Radon transformation.

Many practical reconstruction algorithms have been developed to implement the procedure of reconstruction of a three-dimensional object (or a two-dimensional image thereof) from its projections. These algorithms are designed largely based on the mathematics of the Radon transform, on statistical knowledge of the data acquisition process, and on geometry of the data computing means. Example reconstruction algorithms include filtered back projection algorithms and Fourier-domain reconstruction algorithms.

Iterative algorithms approach the correct solution using multiple iteration steps, which allows one to obtain a better reconstruction at the cost of a higher computation time. Broadly speaking, iterative algorithms begin with an assumed image or volume, compute projections from the image or volume , compare the original projection data, and update the image or volume based upon the difference between the calculated and the actual projections. The advantages of the iterative approach include improved insensitivity to noise and the capability of reconstructing an optimal image in the case of incomplete data.

One notable issue with CT reconstruction processes (iterative or otherwise) is that of metal artefacts. Metal objects are a common cause of artefacts in computed tomography (CT) and cone-beam CT (CBCT) as used in radiography and in radiotherapy. As metal structures within the subject give rise to high attenuation of X-rays, the metal structures effectively block a large proportion of incident radiation. In turn, this leads to strong streaks in any reconstructed image, which can confound structures of interest.

Metal artefacts can therefore obscure or mimic real anatomical structures or pathological conditions. This can lead to misinterpretations and incorrect diagnoses, potentially resulting in inappropriate or harmful treatments. In medical imaging, particularly CT scans, precise visualisation of internal tissues and organs is essential for detecting diseases, injuries, and other abnormalities. Therefore, there is a need for improved tomographic reconstruction techniques that minimise or remove metal aftefacts.

### Summary

According to an aspect of the disclosure, there is provided a computer-implemented method of tomographic reconstruction. The method includes a step of receiving tomographic projection data of a subject (e.g., a human patient or an animal). The projection data may be received in real-time from an imaging device (e.g., a CT scanner or a CBCT scanner) or may be received from external computing means, which may store pre-acquired projection data.

The method of tomographic reconstruction includes executing an initial portion of an iterative reconstruction procedure. The iterative reconstruction procedure uses the tomographic projection data in order to ultimately generate a volume estimate for the subject. The initial portion of the iterative reconstruction procedure generates an initial volume estimate. The initial portion comprises at least one reconstruction step, and preferably multiple reconstruction steps, such that the procedure iteratively refines volume estimates until an initial volume estimate is acquired.

The method of tomographic reconstruction includes a step of identifying one or more metal regions within the initial volume estimate. These metal regions will be those for which high-attenuation is observed. The identified metal regions are used to form a metal mask, (i.e., a binary mask in image space). Other highly attenuating non-metallic regions within the subject (such as stone or glass or other foreign bodies) may be handled using the same techniques herein.

The method of tomographic reconstruction includes a step of forward-projecting the metal mask into projection space so as to determine or calculate metallic projection data (i.e., to determine areas of the detector containing metallic objects). For example, the identified metal may be converted to sinograms though forward projection techniques (mathematically, from image space into projection space). The metal projection data will be zero in regions not influenced by the metal artefacts, and non-zero in suspected metallic regions.

The method of tomographic reconstruction then includes a step of replacing data in the tomographic projection data that corresponds to the metallic projection data with interpolated data. That is, the projection data corresponding to regions considered to be metallic are replaced (in projection space) with interpolated data. The interpolated data are interpolated based on, for example, surrounding data that is considered to be non-metallic. This step of replacing projection data in the regions defined by the metal mask with interpolated data may be considered as a step of metallic inpainting, and the step may be referred to as metal artefact reduction (MAR).

The method of tomographic reconstruction then includes a step of executing a final portion of the iterative reconstruction procedure. The final portion uses the interpolated tomographic projection data to generate a final volume estimate for the subject. The final portion comprises at least one reconstruction step, and preferably multiple reconstruction steps, such that the procedure iteratively refines volume estimates until the final volume estimate is acquired.

The method of tomographic reconstruction then includes a step of inserting a final metal volume into the final volume estimate. In this way, the method generates a corrected final volume estimate ("corrected" in this context meaning that metal aftefacts are removed or reduced). The final metal volume may be any previously determined metal mask. That is, the final metal volume may correspond to original pixel or voxel values from the initial volume estimate. Alternatively, the final metal volume inserted back within image space may be a binary mask scaled to some fixed suitable intensity value.

With reduction or removal of metal aftefacts in tomographic images in medical imaging, techniques herein ensure that the images accurately represent the patient's anatomy, enabling healthcare professionals to make informed decisions and provide optimal patient care. Reducing metal aftefacts enhances reconstructed image clarity and sharpness, allowing for improved visualisation of anatomical structures and pathological features. Metal aftefacts may create false impressions of abnormalities, leading to unnecessary follow-up tests, biopsies, or other invasive procedures. By reducing artefacts, the risk of misinterpretations is minimised, reducing patient anxiety and healthcare costs.

Reconstructed tomographic images are often used for quantitative analysis, such as measuring tissue volumes, densities, or dimensions. Metal aftefacts may distort these measurements, leading to inaccurate results. In research and clinical applications, accurate quantitative data - such as that provided using the techniques herein - are essential for monitoring disease progression, evaluating treatment response, and conducting other analyses.

The iterative reconstruction procedure comprises at least an initial portion and a final portion. The method of tomographic reconstruction may further use an iterative reconstruction procedure with an intermediate portion. The intermediate portion similarly comprises at least one reconstruction step, and preferably multiple reconstruction steps. The method then includes a step of executing the intermediate portion of the iterative reconstruction procedure using the interpolated tomographic projection data and, in turn, generating an intermediate volume estimate, which may then be subject to another MAR procedure.

Similarly to the processing following the initial portion of the iterative reconstruction procedure, the method then identifies metal regions within the intermediate volume and form another metal mask (an intermediate metal mask). The method then forward-projects the metal mask into projection space to determine intermediate metallic projection data. The method then replaces data in the interpolated tomographic projection data that corresponds to the intermediate metallic projection data with interpolated data. This process updates the interpolated tomographic projection data.

Of course, the iterative reconstruction procedure may comprise further intermediate portions, and the above MAR procedure may be repeated accordingly. For instance, the method may comprise, for each portion of a plurality of intermediate portions of the iterative reconstruction procedure, executing the portion to generate a volume estimate, identifying metal regions within the volume estimate as a metal mask, forward-projecting this mask to determine metallic projection data, and updating the interpolated tomographic projection data by replacing data corresponding to the intermediate metallic projection data with interpolated data.

Any or all instances of the MAR procedure may involve normalisation of projection data prior to any interpolation steps. Such procedures may be referred to as normalised metal artefact reduction (NMAR) procedures. For example, with an iterative reconstruction procedure comprising an initial portion and a final portion, prior to the step of replacing data in the tomographic projection data with interpolated data, the method may include a step of normalising the tomographic projection data. Following the step of replacing data in the tomographic projection data, the method may then include a step of denormalising the interpolated tomographic projection data (i.e., reverses the prior normalisation step). This NMAR procedure, in effect, performs "inpainting" in metallic regions with normalised projection data. This is found to greatly reduce the impact of image artefacts, which are often prominent in the regions around any metal objects.

In another example, where the iterative reconstruction procedure comprises an initial portion, an intermediate portion, and a final portion, prior to the step of replacing data in the interpolated tomographic projection data (following the intermediate portion) with interpolated data, the method may include a step of normalising the interpolated tomographic projection data. Following the step of updating the interpolated tomographic projection data, the method may then include a step of denormalising the update interpolated tomographic projection data. Relative to application of a single NMAR procedure alone, the present example (which includes a MAR procedure followed by a NMAR procedure) is particularly well-suited for addressing poor quality identification of soft tissue regions in the presence of strongly attenuating metal artefacts. The first reconstruction pass (initial portion) identifies the metal; the next reconstruction pass (intermediate portion) interpolates data and compensates for the metal; and a final reconstruction pass (final portion) performs NMAR on the metal compensated image from the preceding pass.

With any or all normalisation procedures, the projection data may be normalised based on a volume forward projection of a prior image. This prior image may be obtained, for example, by a threshold segmentation of the initial image. Original raw data may be divided by the projection data of the prior image and, following interpolation, denormalised. For instance, the Hounsfield scale may be used and the normalisation procedure may assign a Hounsfield unit (HU) value of 0 (corresponding to water) to any tissue determined to have values below 0 (e.g., fat, which typically has HU values between -120 and -90). The threshold segmentation may not necessarily explicitly require identification of, for example, soft tissue regions, but may be obtained as a polychromatic forward projection through the volume, with metal regions removed and soft tissue regions thresholded to water. In practice, the normalisation procedure may be achieved using a multi-material ray tracer, which may simultaneously track the integral and length of each material present in the scanned volume. In this way, it is possible to use the total length of the "soft tissue" class (i.e., materials with intensities above some threshold and lower than bone) to implicitly threshold in one step.

Where the method of tomographic reconstruction includes uses an iterative reconstruction procedure that may be decomposed into an initial portion (for iterative generation of an initial volume estimate, prior to metallic inpainting), an intermediate portion (for iterative generation of an intermediate volume estimate and normalisation of soft-tissue regions), and a final portion (for iterative generation of a final volume estimate), there is scope for optimisation of the number of reconstruction iterations involved in each portion. Empirically, particularly accurate results have been provided where the initial portion comprises substantially between 15 % and 25 % of the total number of iterations of the iterative reconstruction procedure, the intermediate portion comprises substantially between 25 % and 35 % of the total number of iterations, and the final portion comprises the remaining number of iterations. For example, where an iterative procedure comprises 100 update iterations in total, an initial portion of 20 iterations, followed by an intermediate portion of 30 iterations, followed by a final portion of 50 iterations, is found to be particularly suitable.

In any method of tomographic reconstruction, the step of identifying metal regions in the initial volume estimate may comprise a thresholding procedure, which targets metal regions. For example, the metal thresholding procedure may assign a metal label to pixels or voxels of the initial volume estimate that have a pixel or voxel intensity above (or below) a predetermined static threshold value.

In any thresholding procedure, of course, rather than a predetermined static value, a more nuanced value may be used. For instance, the threshold value may vary depending on the anatomy being reconstructed. For metal thresholding for example, one would like the threshold value to be as low as possible so as to capture even lower density metals, whilst still being higher than any other biological material so as to avoid accidental categorisation of non-metal regions as metallic. Dense bones can be particularly problematic in this regard. A suitable choice of metal threshold value may then be slightly higher than the intensity value of any bone material identified in the volume. This need not be a fixed value for all use cases; for instance, teeth are particularly dense and thus the metal threshold may be higher for jaw scans than for, e.g., thorax scans.

In any thresholding procedure, the threshold values may vary depending on the presence of further corrective techniques used within the reconstruction procedure. For instance, if the reconstruction procedure does not apply any scatter correction techniques, pixel or voxels intensity values in reconstructed volumes are typically reduced as a result. In turn, the threshold values will vary accordingly.

Alternatively, identification of soft tissue regions and/or identification of metal regions may be performed with techniques aside from thresholding. Suitable techniques include a machine learning-based approach, or using prior information about a particular implant (in cases where one already knows the implants shape and approximate location). Such techniques may be particularly beneficial for cases where there is both very dense bone material and low density metal in the same region, with the intensity of dense bone pixels or voxels being higher than the intensity of low density metals.

Where the method of tomographic reconstruction includes uses an iterative reconstruction procedure that may be decomposed into an initial portion (for iterative generation of an initial volume estimate, prior to metallic inpainting), an intermediate portion (for iterative generation of an intermediate volume estimate), and a final portion (for iterative generation of a final volume estimate), there is scope for optimisation of the number of reconstruction iterations involved in each portion. Empirically, particularly accurate results have been provided where the initial portion comprises substantially between 15 % and 25 % of the total number of iterations of the iterative reconstruction procedure, the intermediate portion comprises substantially between 25 % and 35 % of the total number of iterations, and the final portion comprises the remaining number of iterations. For example, where an iterative procedure comprises 100 update iterations in total, an initial portion of 20 iterations, followed by an intermediate portion of 30 iterations, followed by a final portion of 50 iterations, is found to be particularly suitable.

The iterative reconstruction procedure used in the method of tomographic reconstruction (and any portions thereof) may include steps of (i) back-projecting the tomographic projection data in order to generate a candidate volume estimate; (ii) forward-projecting the candidate volume estimate in order to generate candidate projection data; and (iii) updating the candidate volume estimate based on a difference between the tomographic projection data and the candidate projection data. Steps (i) to (iii) may be repeated until some predetermined stopping criterion (e.g., a predetermined number of iterations or a predetermined convergence threshold) is met. The final updated candidate volume estimate is then output as the volume estimate (i.e., the initial volume estimate, final volume estimate, or intermediate volume estimate).

In any method of tomographic reconstruction according to the present disclosure, the method may further include a step of performing a cleaning operation on the metal mask prior to determining the metallic projection data. The cleaning operation may include any or all of dilation, erosion, hole filling, and clutter removal. Dilation, for instance, allows a margin of error to be applied on the initial metal segmentation. Hole filling may be used to assign small regions that are completely surrounded with suspected metallic material but otherwise considered to be non-metal region with a metallic label. Clutter removal may, for example, involve a procedure of erosion followed by dilation and is effective at removing small non-metal regions within a larger metal region (or vice versa).

In any method of tomographic reconstruction according to the present disclosure, any interpolated data may be determined using a linear interpolation technique. Interpolation procedures are employed to inpaint specific regions of projection data. Linear interpolation, which treats each projection independently, is found to be suitably accurate while ensuring adequate computational processing times. Note that the aim here is to remove "metal-corrupted" projection values such that they no longer cause metal aftefacts in subsequent reconstruction procedures; it is not necessary to obtain perfectly accurate values. Linear interpolation may further treat each pixel or voxel row independently. In this way interpolation procedure involves inpainting values in a one-dimensional list of values using linear interpolation between the values on either end of the segment to be filled. Of course, interpolation may be performed in two dimensions or three dimensions. Alternative interpolation procedures may be used, including a non-linear interpolation (for example a spline), filling with a constant value, or prediction (for example with a trained neural network) of the values with which to inpaint.

In any method of tomographic reconstruction according to the present disclosure, additional corrective steps may be incorporated, including scatter correction steps and/or beam hardening correction steps.

While the techniques herein are well-suited to any iterative tomographic reconstruction methods, including fan beam iterative reconstruction, the method of tomographic reconstruction is particularly well-suited to CBCT reconstruction procedures, for which there do not exist effective metal artefact reduction techniques. With this use-case, the tomographic projection data may be CBCT projection data.

Embodiments of another aspect of the disclosure include a data processing apparatus, which comprises a memory and a processor. The memory stores computer-executable instructions to carry out a computer-implemented method of tomographic reconstruction. The processing unit is configured to execute the instructions to carry out the method of tomographic reconstruction.

Embodiments of another aspect of the disclosure include a computer program comprising instructions, which, when executed a data processing apparatus, causes the data processing apparatus to execute a computer-implemented method of tomographic reconstruction.

Embodiments of another aspect of the disclosure include a non-transitory computer-readable storage medium comprising instructions, which, when executed by a data processing apparatus, cause the data processing apparatus to execute a computer-implemented method of tomographic reconstruction.

Embodiments may be implemented in digital electronic circuitry, or in computer hardware, firmware, software, or in combinations thereof. Embodiments may be implemented as a computer program or a computer program product, i.e., a computer program tangibly embodied in a non-transitory information carrier, e.g., in a machine-readable storage device or in a propagated signal, for execution by, or to control the operation of, one or more hardware modules.

Aspects of embodiments have been described using such terms as "computing means", "means for accepting input", and "processing unit". The skilled person will appreciate that such functional terms and their equivalents may refer to parts of the system that are spatially separate but combine to serve the function defined. Equally, the same physical parts of the system may provide two or more of the functions defined. For example, separately defined means may be implemented using the same memory and/or processor as appropriate.

### Brief Description of the Drawings

Reference is made, by way of example only, to the accompanying drawings in which:
Figure 1 is a flowchart of a general method of tomographic reconstruction according to embodiments;
Figure 2 is an example reconstructed CT image, reconstructed using a known technique;
Figure 3 is an example reconstructed CT image, reconstructed using a technique according to the present disclosure;
Figure 4 is an example reconstructed CT image, reconstructed using a modified technique according to the present disclosure;
Figure 5 is a set of comparative reconstructed CT images;
Figure 6 is another set of comparative reconstructed CT images;
Figure 7 is an example method of tomographic reconstruction according to the present disclosure;
Figure 8 is an example modified method of tomographic reconstruction according to the present disclosure;
Figure 9 is a schematic overview of a computing device suitable for implementing methods of tomographic reconstruction according to the present disclosure; and
Figure 10 is a schematic overview of an imaging system suitable for implementing methods of tomographic reconstruction according to the present disclosure.

### Detailed Description

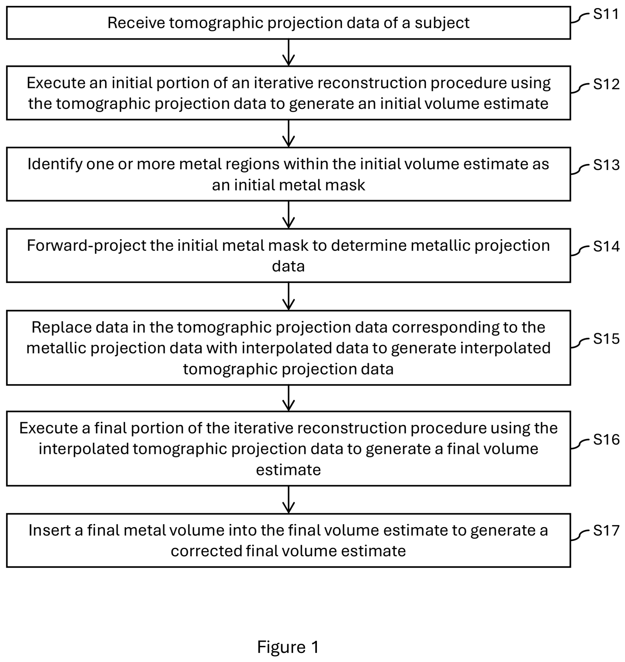

Figure 1 is an overview of a general method of tomographic reconstruction according to aspects of the present disclosure. The general method for synthetic data generation is implemented using computing means.

At S11, the computing means receives tomographic projection data of a subject.

At S12, the computing means executes an initial portion of an iterative reconstruction procedure using the tomographic projection data to generate an initial volume estimate.

At S13, the computing means identifies one or more metal regions within the initial volume estimate as an initial metal mask.

At S14, the computing means forward-projects the initial metal mask to determine metallic projection data.

At S15, the computing means replaces data in the tomographic projection data corresponding to the metallic projection data with interpolated data to generate interpolated tomographic projection data.

At S16, the computing means executes a final portion of the iterative reconstruction procedure using the interpolated tomographic projection data to generate a final volume estimate.

At S17, the computing means inserts a final metal volume into the final volume estimate to generate a corrected final volume estimate.

In the field, the most common approach to resolving metal aftefacts involves removal of the metal objects from the measurements entirely before any reconstruction procedure initiates. This can be achieved in two steps: firstly, identifying the location of metal in all of the measurements; and, secondly, replacing these regions to approximate measurements as if there were no metal present. However, this often necessitates two entire reconstruction procedures: a first to identify the location of metal, and a second after the metal is removed to form a metal-compensated reconstruction. Naturally, such conventional techniques are especially time consuming.

Methods of tomographic reconstruction herein, however, enable integration of metal artefact reduction procedures within a single iterative reconstruction procedure. In this way, reconstruction requires only a single reconstruction procedure.

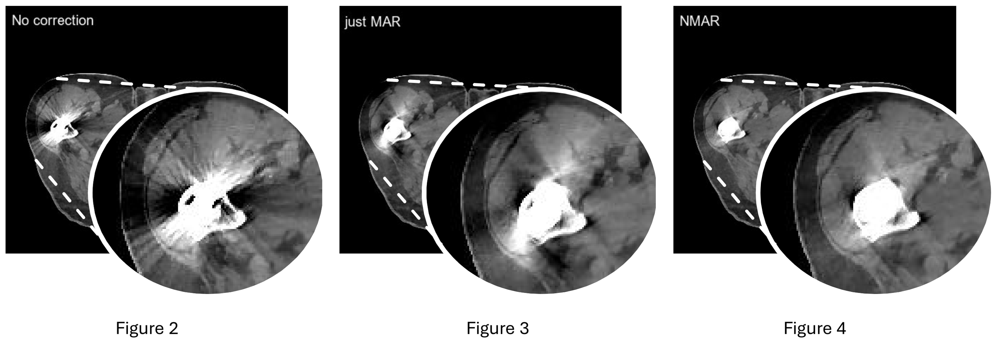

Figure 2 is an example reconstructed CT image of a human patient's pelvis. The reconstructed image has not been subject to any metal artefact reduction procedure. Rather, the image reconstruction procedure used here is known in the art. Inset is a magnified view of a smaller region, in which there exists metal (e.g., a metal-on-metal hip implant). Image reconstruction here is performed using an iterative reconstruction procedure enabled by Polyquant, which is described further below. As seen, the presence of metal gives rise to notable metal artefacts in the form of white, radial streaks, which are regions of over saturation of pixel intensity. These metal aftefacts obscure anatomical details in the surrounding region of the patient.

Figure 3 is an example reconstructed CT image of a human patient's pelvis, acquired using techniques according to the present disclosure. In contrast to Figure 2, the reconstruction procedure for this reconstructed image incorporates projection inpainting during an iterative reconstruction procedure (i.e., a MAR procedure; again, enabled by Polyquant). The metal artefact is markedly reduced, and pixels around the metal region are now resolvable. Corrected final image estimates such as those illustrated here evidently more accurately represent the patient's anatomy, enabling healthcare professionals to make informed decisions and provide optimal patient care

As above, techniques according to the present disclosure may optionally further include a normalising step, in which interpolation of projection data occurs over normalised measurements (NMAR). This NMAR procedure provides a significant improvement over simple linear inpainting. The normalisation step may include division of projection data by a projection through a volume thresholded (i.e., segmented or otherwise labelled) into a soft tissue class and a bone class, which leads the normalised measurements having an intensity close to 1. This has been shown to greatly improve the resolution, which is otherwise often lost in and around metal objects.

Figure 4 is an example reconstructed CT image of a human patient's pelvis, acquired using techniques according to the present disclosure that additionally include a normalisation step (i.e., MAR followed by NMAR). In contrast to Figure 3, the reconstruction procedure for this reconstructed image additionally incorporates normalisation of projection data and the subsequent replacement metallic projection data within the normalised projection data. As shown, the additional of a normalisation procedure further improves reconstructed image quality -this is particularly notable in the reduction of the metal artefact and the improved resolution in and around the boundary of the metal region.

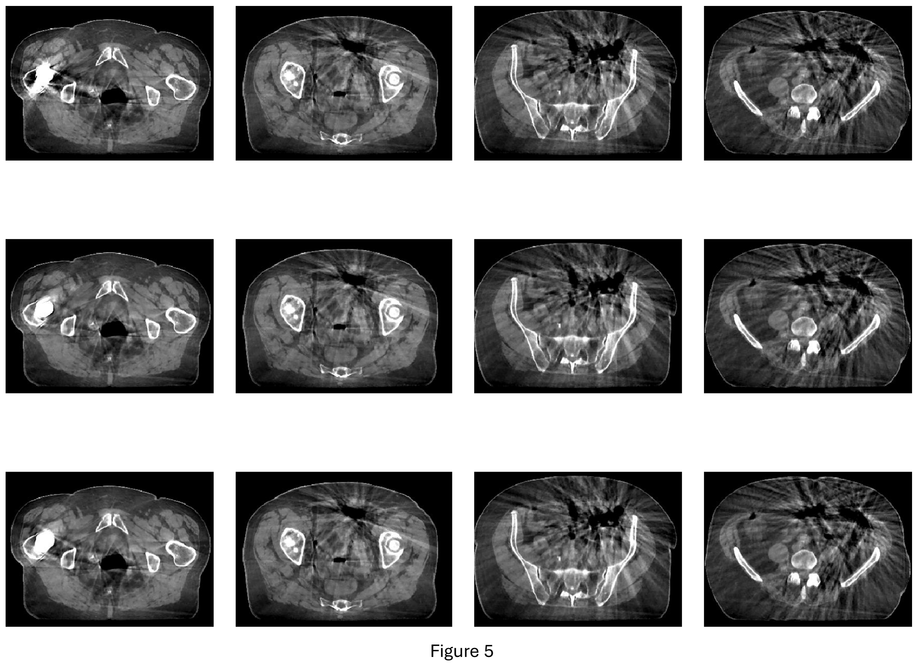

Figure 5 is a set of example reconstructed CT images of a human patient's pelvis (the same as that in Figures 2 to 4). Each column corresponds to a different slice in the patient's reconstructed volume. The top row shows reconstructed images that have not been subject to any metal artefact reduction procedure. The middle row shows reconstructed images that have been subject to a metal artefact reduction procedure according to techniques herein that additionally includes a normalisation procedure (MAR followed by NMAR). The bottom row shows reconstructed images that have been subject to a metal artefact reduction procedure according to techniques herein (MAR only).

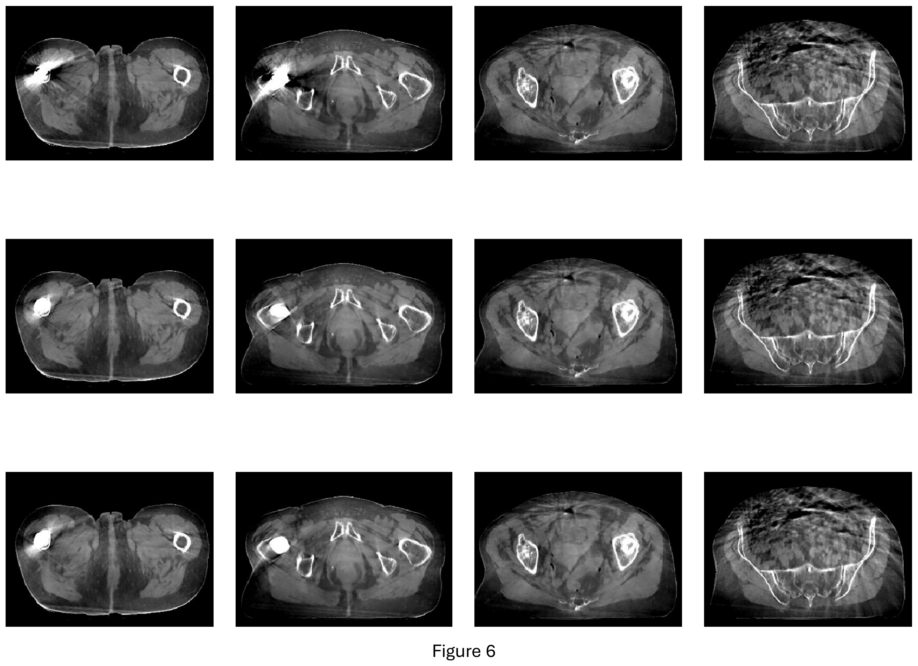

Figure 6 is a set of example reconstructed CT images of another human patient's pelvis. Each column corresponds to a different slice in the patient's reconstructed volume. The top row shows reconstructed images that have not been subject to any metal artefact reduction procedure. The middle row shows reconstructed images that have been subject to a metal artefact reduction procedure according to techniques herein that additionally includes a normalisation procedure (MAR followed by NMAR). The bottom row shows reconstructed images that have been subject to a metal artefact reduction procedure according to techniques herein (MAR only).

In all reconstructed images presented here, it is straightforward to see the improvements in image quality in and around metal artefacts when tomographic reconstruction techniques as described herein are applied. Notably, it is also clear that when the anatomical region does not include any metal (this is the case, for example, with the right-most images in both Figure 5 and Figure 6), the tomographic reconstruction techniques as described herein have little to no effect on the reconstructed image quality or fidelity.

The following structured outline provides an example implementation of tomographic reconstruction, which integrates metal artefact reduction through projection inpainting within an iterative reconstruction procedure (incorporating MAR optionally followed by NMAR). The iterative reconstruction procedure comprises *L* steps (*L* here may be the number of volume/image updates or the number of epochs).
1) After M steps (where 0 *< M < L*), perform metal inpainting:
   a) Identify metal structures in the current volume estimate (through thresholding for example) to create a metal mask.
   b) Optionally, perform cleaning operations to the mask (e.g., dilation, erosion, hole filling, clutter removal).
   c) Apply a forward projection operation through the metal mask to identify all measured elements containing metal that are to be replaced.
   d) Replace all measurements containing metal, using linear interpolation for example.
   e) Update the measurements with the inpainted measurements and continue the iterations.
2) Optionally, after *N* steps where (0 *< M < N < L*):
   a) Create a normalising projection from the current estimate by thresholding soft tissues according to some predetermined value (such as water, which has a Hounsfield unit (HU) value of 0) and applying a forward projection operation.
   b) Normalise the measurements and inpaint regions containing metal, as determined in the first step.
   c) Denormalise inpainted measurements and continue the iterations.
3) After L steps: insert the metal mask into to final reconstructed volume to complete the metal compensation.
In this example, the iterative reconstruction procedure from 0 to *M* may be referred to as the initial portion; the iterative reconstruction procedure from *M* to *N* may be referred to as the intermediate portion; and the iterative reconstruction procedure from *N* to L may be referred to as the final portion. Step 1) above may be referred to as a MAR procedure. Step 2) above may be referred to as an NMAR procedure.

The values of *L*, *M* and *N* in the above are variable and optimum values may be dependent on other specific parameter values. Empirically, it is found that small values of L and values of N substantially around M/2 are well-suited for adequate reconstruction quality without unsuitably high computational costs. This leaves sufficient volume/image updates or epochs after the MAR and/or NMAR steps for the iterative reconstruction procedure to converge to a stable volume estimate. For instance, where an iterative reconstruction procedure includes MAR followed by NMAR and includes 100 steps (*L*), MAR may be implemented after 20 steps (*M*) and NMAR may be implemented after a further 30 steps (i.e., 50 steps (*N*) into the iterative reconstruction procedure). The final portion in this example then comprises half of the number of iterations of the entire iterative reconstruction procedure.

Denormalisation of projection data may be achieved using any conventional means, including - for example - though pixel- (or voxel-) wise multiplication based on prior projection data (e.g., based on a sinogram from the step prior to normalisation in the iterative reconstruction procedure).

The techniques described herein are well-suited for implementation within a range of iterative reconstruction procedures. The quantitative iterative reconstruction procedure known as Polyquant is particularly suitable (Mason et al., "Quantitative cone-beam CT reconstruction with polyenergetic scatter model fusion", Physics in Medicine & Biology (2018), and Mason et al., "Polyquant CT: direct electron and mass density reconstruction from a single polyenergetic source", Physics in Medicine and Biology (2017c)).

Polyquant offers several key advantages in medical imaging, leading to improved diagnostic and therapeutic outcomes. A primary benefit is its ability to produce enhanced image quality with a reduction in artefacts. By addressing limitations common in conventional CBCT, such as beam hardening, Polyquant provides clearer and more accurate representations of the patient's anatomy, resulting in enhanced contrast in the reconstructed volume estimates and images. Experimental evaluations have also demonstrated the ability of Polyquant to significantly reduce beam hardening artefacts, which can obscure details and affect the accuracy of quantitative measurements.

The foundation of the Polyquant technique lies in its data-centric piecewise linear model for X-ray attenuation as a function of electron or mass density. This model represents the attenuation of X-rays passing through a material as a sum of several linear segments. Each segment is defined by a slope and a y-intercept, and these parameters can vary depending on the energy of the X-ray photon. This energy dependence is crucial for accurately representing how different materials attenuate X-rays across the broad spectrum produced by clinical CT scanners. The transition points between these linear segments, known as "knees", are a key feature of the model and are deliberately kept constant across all X-ray energies used in the imaging procedure. This constraint on the transition points is useful for maintaining computational efficiency within the Polyquant algorithm. The mathematical formulation of this model includes specific constraints to ensure the model behaves in a physically realistic manner, such as maintaining continuity between the different linear segments and ensuring that a complete vacuum results in zero X-ray attenuation.

The iterative reconstruction procedure in Polyquant typically involves minimising a penalised negative log-likelihood (NLL) function. This objective function is designed to model the statistical characteristics of the X-ray measurements, often assuming a Poisson distribution, which is a good approximation for photon counting processes in CT. Minimising this NLL function aims to find the distribution of electron or mass density within the scanned object that best explains the observed X-ray projection data according to the chosen statistical model. A common approach to achieve this minimisation is through a gradient descent method, which may be enhanced with acceleration techniques like momentum to improve the speed of convergence. To further refine the reconstructed image and ensure its quality, regularisation techniques, such as Total Variation (TV) regularisation, may be incorporated. These techniques help to suppress noise in the image while preserving important features like edges and boundaries between different tissues. The overall iterative procedure typically begins with an initial estimate of the density distribution and then proceeds through a series of iterations. Each iteration involves a gradient descent step, potentially with an inertial term to accelerate convergence, followed by the application of a proximity operator. This proximity operator serves to enforce constraints on the reconstructed density values, such as ensuring they remain non-negative and within physically plausible bounds, and also to incorporate the effects of the chosen regularisation method.

To effectively address the challenges posed by scatter radiation, particularly in the context of Cone-Beam CT (CBCT), a significant advancement provided by the Polyquant technique is the ability to incorporate, for example, CNN-based scatter estimation procedures.

Iterations are continued until a predefined convergence criterion is met (e.g., a small change in the density estimate between iterations or a maximum number of iterations). The final output is a 3D image (volume) representing the reconstructed quantitative density (electron density or mass density) of the scanned subject.

From a practical standpoint, computational demands are a consideration for any iterative reconstruction procedure such as Polyquant. Suitable hardware for realising tomographic reconstruction using the techniques herein includes any general-purpose CPU. Techniques herein may be implemented using many computing platforms and languages, including MATLAB (for which a Polyquant CT Reconstruction Toolbox is available) or C++. Optimised implementations and hardware such as GPUs and GPGPUs may be utilised to further reduce tomographic reconstruction times.

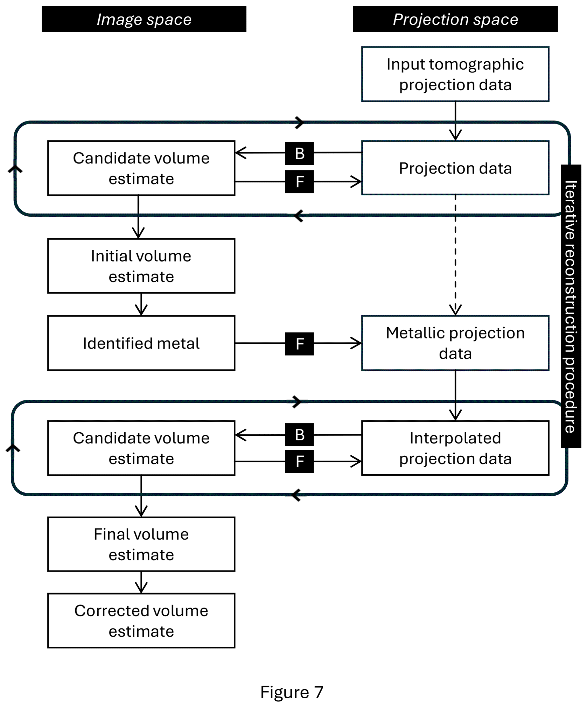

Figure 7 is a schematic flow diagram of an example method of tomographic reconstruction according to the present disclosure. The processing may be described in terms of operations performed and data structures provided in image space and in projection space. Tomographic projection data is input, which is input into an initial portion of an iterative reconstruction procedure. Iterative processing may, for example, involve repeated back-projection (denoted "B") and forward-projection or reconstruction (denoted "F") between projection data (in projection space) and candidate volume estimates (in image space). When some predetermined stopping criterion is met, the current candidate volume estimate becomes the initial volume estimate.

A metal identification procedure is performed on the initial volume estimate to yield a metal mask. The metal mask is then forward projected so as to provide metallic projection data. Projection data (corresponding to the initial volume estimate; i.e., the projection data present at the end of the first portion of the iterative reconstruction procedure) is replaced (via a procedure of interpolation) with the metallic projection data, producing interpolated projection data.

Iterative processing then resumes, with the final portion of the iterative reconstruction procedure similarly involving repeated back-projection and forward-projection between projection data and candidate volume estimates. When some predetermined stopping criterion is met, the current candidate volume estimate becomes the final volume estimate. A final metal mask (such as that corresponding to the earlier identified metal) is then inserted into the final volume estimate to provide a corrected volume estimate, which enable healthcare professionals to make informed decisions and provide optimal patient care.

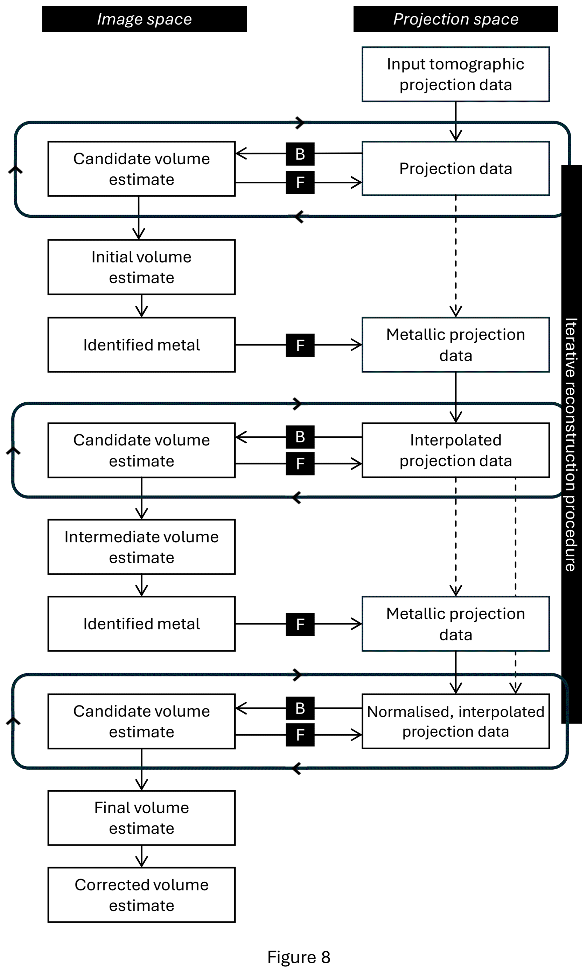

Figure 8 is another schematic flow diagram of an example method of tomographic reconstruction according to the present disclosure. Relative to the procedure outlined in Figure 7, this modified procedure additionally includes an intermediate portion of the iterative reconstruction procedure, which is followed by a normalisation procedure. The above description for operations and data structures corresponding to those in Figure 7 is equally applicable to Figure 8.

Following replacement of projection data with (interpolated) metallic projection data, the intermediate portion of the iterative reconstruction procedure yields an intermediate volume estimate. Similarly to above, a metal identification procedure is performed on the intermediate volume estimate to yield an intermediate metal mask, which is forward-projected to provide intermediate metallic projection data. Projection data (corresponding to the intermediate volume estimate; i.e., the projection data present at the end of the intermediate portion of the iterative reconstruction procedure) is normalised (e.g., with reference to projection data of a prior image), producing normalised projection data. This normalisation procedure may be achieved through the Polyquant forward projector functionality, which is essentially a multi-material ray tracer and polychromatic integrator and allows computation of the polychromatic X-ray measurement. In the normaliser, the density integral of the soft-tissue range is discarded to perform implicit thresholding to water.

Projection data in the normalised projection data corresponding to the metallic projection data is replaced (interpolated) so as to update the existing interpolated projection data, thereby providing normalised, interpolated projection data. As before, iterative processing then resumes, with the final portion of the iterative reconstruction procedure similarly involving repeated back-projection and forward-projection between projection data and candidate volume estimates. This modified procedure (involving MAR followed by NMAR) improves accuracy and fidelity of reconstructed volume estimates.

Further modifications to the general procedure may be envisaged and implemented, including performing metal identification and soft tissue identification (and the subsequent interpolation and normalisation procedures) together between distinct portions of the iterative reconstruction procedure.

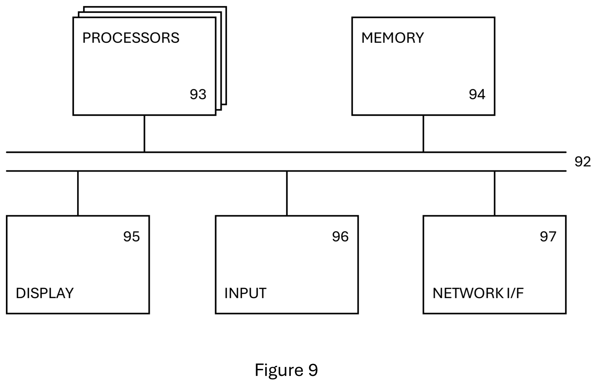

Figure 9 is a block diagram of a computing device which may be used to implement a method of tomographic reconstruction according to the present disclosure. The computing device comprises a processor 93 and memory, 94. Optionally, the computing device also includes a network interface 97 for communication with other computing devices. For example, a system may be composed of a network of such computing devices. Optionally, the computing device also includes one or more input mechanisms 96 such as keyboard and mouse, and a display unit 95 such as one or more monitors. The components are connectable to one another via a bus 92.

The memory 94 may include a computer readable medium, which term may refer to a single medium or multiple media (e.g., a centralised or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 93 is configured to control the computing device and execute processing operations, for example executing code stored in the memory to implement the various different functions of the tomographic reconstruction techniques described herein. The memory 94 stores data being read and written by the processor 93. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 95 may display a representation of data stored by the computing device (e.g., a reconstructed volume estimate and/or related images thereof) and may also display a cursor and dialog boxes and screens enabling interaction between a user and the programs and data stored on the computing device.

The input mechanisms 96 may enable a user to input data (e.g., tomographic projection data) and instructions to the computing device.

The network interface (network I/F) 97 may be connected to a network, such as the Internet, and is connectable to other such computing devices via the network. The network I/F 97 may control data input/output from/to other apparatus via the network. Other peripheral devices such as microphone, speakers, printer, power supply unit, fan, case, scanner, tracker ball etc may be included in the computing device.

Methods as described herein may be carried out on a computing device such as that illustrated in Figure 9. Such a computing device need not have every component illustrated in Figure 9, and may be composed of a subset of those components.

A method of tomographic reconstruction as described herein may be carried out by a single computing device in communication with one or more data storage servers via a network. The computing device may be a data storage itself storing volume estimates and/or projection data.

A method of tomographic reconstruction as described herein may be carried out by a plurality of computing devices operating in cooperation with one another. One or more of the plurality of computing devices may be a data storage server storing at least a portion of volume estimates and/or projection data.

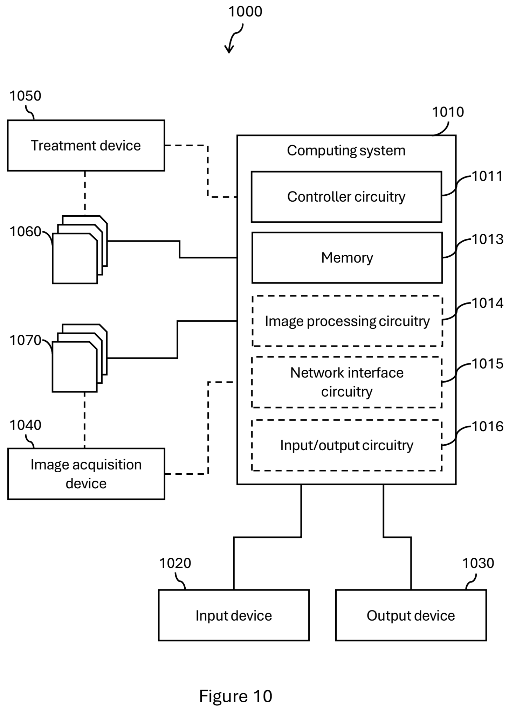

Figure 10 is a block diagram of an implementation of an imaging system 1000, suitable for executing methods for tomographic reconstruction as described herein. The example imaging system 1000 comprises a computing system 1010 within which a set of instructions, for causing the computing system 1010 to perform the method (or steps thereof) discussed herein, may be executed. The computing system 1010 may implement tomographic reconstruction. The computing system 1010 may also be referred to as a computer, computing means, or a computing device, and may correspond to the computing device illustrated in Figure 9. In particular, the methods described herein may be implemented by a processor or controller circuitry 1011 of the computing system 1010.

The computing system 1010 shall be taken to include any number or collection of machines, e.g., computing device(s), that individually or jointly execute a set (or multiple sets) of instructions to perform any one or more of the methods discussed herein. That is, hardware and/or software may be provided in a single computing device, or distributed across a plurality of computing devices in the computing system. In some implementations, one or more elements of the computing system may be connected (e.g., networked) to other machines, for example in a Local Area Network (LAN), an intranet, an extranet, or the Internet. One or more elements of the computing system may operate in the capacity of a server or a client machine in a client-server network environment, or as a peer machine in a peer-to-peer (or distributed) network environment. One or more elements of the computing system may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine.

The computing system 1010 includes controller circuitry 1011 and a memory 1013 (e.g., read-only memory (ROM), flash memory, dynamic random access memory (DRAM) such as synchronous DRAM (SDRAM) or Rambus DRAM (RDRAM), etc.). The memory 1013 may comprise a static memory (e.g., flash memory, static random access memory (SRAM), etc.), and/or a secondary memory (e.g., a data storage device), which communicate with each other via a bus (not shown). Memory 1013 may be used to store or buffer tomographic projection data and parameters until required for image reconstruction and may be used to store volume estimates throughout processing.

Controller circuitry 1011 represents one or more general-purpose processors such as a microprocessor, central processing unit, accelerated processing units, or the like. More particularly, the controller circuitry 1011 may comprise a complex instruction set computing (CISC) microprocessor, reduced instruction set computing (RISC) microprocessor, very long instruction word (VLIW) microprocessor, processor implementing other instruction sets, or processors implementing a combination of instruction sets. Controller circuitry 1011 may also include one or more special-purpose processing devices such as an application specific integrated circuit (ASIC), a field programmable gate array (FPGA), a digital signal processor (DSP), network processor, or the like. One or more processors of the controller circuitry may have a multicore design. Controller circuitry 1011 is configured to execute the processing logic for performing the operations and steps discussed herein.

The computing system 1010 may further include a network interface circuitry 1015. The computing system 1010 may be communicatively coupled to an input device 1020 and/or an output device 1030, via input/output circuitry 1016. In some implementations, the input device 1020 and/or the output device 1030 may be elements of the computing system 1010. The input device 1020 may include an alphanumeric input device (e.g., a keyboard or touchscreen), a cursor control device (e.g., a mouse or touchscreen), an audio device such as a microphone, and/or a haptic input device. The output device 1030 may include an audio device such as a speaker, a video display unit (e.g., a liquid crystal display (LCD) or a cathode ray tube (CRT)), and/or a haptic output device. In some implementations, the input device 1020 and the output device 1030 may be provided as a single device, or as separate devices.

In some implementations, the computing system 1010 may comprise image processing circuitry 1014. Image processing circuitry 1014 may be configured to procedure measured data 1070 (e.g., images, imaging data, projections, projection data), such as tomographic projection data obtained from one or more imaging data sources, a treatment device 1050 and/or an image acquisition device 1040. Image processing circuitry 1014 may be configured to process, or pre-process, measured data 1070. For example, image processing circuitry 1014 may convert received data into a particular format, size, resolution or the like. Image processing circuitry 1014 may be configured to perform image reconstruction. In some implementations, image processing circuitry 1014 may be combined with controller circuitry 1011.

In some implementations, the imaging system 1000 may further comprise an image acquisition device or apparatus 1040 and/or a treatment device or apparatus 1050. The image acquisition device 1040 and the treatment device 1050 may be provided as a single device. In some implementations, treatment device 1050 is configured to perform imaging, for example in addition to providing treatment and/or during treatment.

Image acquisition device 1040 may be configured to perform positron emission tomography (PET), computed tomography (CT) (including CBCT), magnetic resonance imaging (MRI), single positron emission computed tomography (SPECT), X-ray, and the like.

Image acquisition device 1040 may be configured to output measured data 1070, which may be accessed by computing system 1010. Treatment device 1050 may be configured to output treatment data 960, which may be accessed by computing system 1010. Treatment data 860 may be obtained from an internal data source (e.g., from memory 1013) or from an external data source, such as treatment device 1050 or an external database.

The various methods described above may be implemented by a computer program. The computer program may include computer code (e.g., instructions) arranged to instruct a computer to perform the functions of one or more of the various methods described above. For example, the steps of the methods described in relation to Figure 1 may be performed by the computer code. The steps of the methods described above may be performed in any suitable order. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD. The instructions may also reside, completely or at least partially, within the memory 1013 and/or within the controller circuitry 1011 during execution thereof by the computing system 1010, the memory 1013 and the controller circuitry 1011 also constituting computer-readable storage media.

In an implementation, the modules, components and other features described herein may be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may comprise a special-purpose processor, such as an FPGA or an ASIC. A hardware component may also include programmable logic or circuitry that is temporarily configured by software to perform certain operations.

In addition, the modules and components may be implemented as firmware or functional circuitry within hardware devices. Further, the modules and components may be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "receiving", "executing", "identifying", "replacing", or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

While certain embodiments have been described, these embodiments have been presented by way of example only, and are not intended to limit the scope of the invention. Indeed, the methods and apparatuses described herein may be embodied in a variety of other forms; furthermore, various omissions, substitutions and changes in the form of methods and apparatus described herein may be made.

## Claims

1. A computer-implemented method of tomographic reconstruction, the method comprising:
receiving tomographic projection data of a subject;
executing an initial portion of an iterative reconstruction procedure using the tomographic projection data to generate an initial volume estimate;
identifying one or more metal regions within the initial volume estimate as an initial metal mask;
forward-projecting the initial metal mask to determine metallic projection data;
replacing data in the tomographic projection data corresponding to the metallic projection data with interpolated data to generate interpolated tomographic projection data;
executing a final portion of the iterative reconstruction procedure using the interpolated tomographic projection data to generate a final volume estimate; and
inserting a final metal volume into the final volume estimate to generate a corrected final volume estimate.

2. The computer-implemented method of tomographic reconstruction of claim 1, further comprising:
executing an intermediate portion of the iterative reconstruction procedure using the interpolated tomographic projection data to generate an intermediate volume estimate;
identifying one or more metal regions within the intermediate volume estimate as an intermediate metal mask;
forward-projecting the intermediate metal mask to determine intermediate metallic projection data;
replacing data in the interpolated tomographic projection data corresponding to the intermediate metallic projection data with interpolated data to update the interpolated tomographic projection data.

3. The computer-implemented method of tomographic reconstruction of claim 2, further comprising repeatedly updating the interpolated tomographic projection data for a plurality of intermediate portions of the iterative reconstruction procedure.

4. The computer-implemented method of tomographic reconstruction of any preceding claim, further comprising:
prior to replacing data in the tomographic projection data and/or the interpolated tomographic projection data, normalising the tomographic projection data and/or the interpolated tomographic projection data; and
denormalising the interpolated tomographic projection data.

5. The computer-implemented method of tomographic reconstruction of claim 4, wherein normalising comprises a soft tissue thresholding procedure.

6. The computer-implemented method of tomographic reconstruction of any preceding claim, wherein identifying one or more metal regions comprises a metal thresholding procedure.

7. The computer-implemented method of tomographic reconstruction of any preceding claim, wherein the final portion of the iterative reconstruction procedure comprises substantially half of the number of iterations of the iterative reconstruction procedure.

8. The computer-implemented method of tomographic reconstruction of any preceding claim, wherein the iterative reconstruction procedure comprises:
(i) back-projecting tomographic projection data to generate a candidate volume estimate;
(ii) forward-projecting the candidate volume estimate to generate candidate projection data;
(iii) updating the candidate volume estimate based on a difference between the tomographic projection data and the candidate projection data; and
(iv) repeating (ii) and (iii) until a stopping criterion is met and outputting the candidate volume estimate.

9. The computer-implemented method of tomographic reconstruction of any preceding claim, further comprising performing a cleaning operation on any metal mask prior to determining any metallic projection data, optionally wherein the cleaning operation comprises any or all of dilation, erosion, hole filling, and clutter removal.

10. The computer-implemented method of tomographic reconstruction of any preceding claim, wherein any interpolated data is determined using a linear interpolation technique.

11. The computer-implemented method of tomographic reconstruction of any preceding claim, further comprising performing scatter correction and/or beam hardening correction on the tomographic projection data.

12. The computer-implemented method of tomographic reconstruction of any preceding claim, wherein the tomographic projection data is cone-beam computed tomographic, CBCT, projection data.

13. A data processing apparatus comprising a memory storing computer-executable instructions, and a processor configured to execute the instructions to carry out the computer-implemented method of any of claims 1 to 12.

14. A computer program comprising instructions which, when the program is executed by a computer, cause the computer to carry out the computer-implemented method of any of claims 1 to 12.

15. A computer-readable medium comprising instructions which, when executed by a computer, cause the computer to carry out the computer-implemented method of any of claims 1 to 12.
